# EUROPEAN PATENT APPLICATION

(11) **EP 4 654 372 A1**
(43) Date of publication of application: **26.11.2025**
(21) Application number: 24907732.2
(22) Date of filing: 23.10.2024
(51) Int. Cl.: H01M 50/538, H01M 50/167, H01M 50/186, H01M 10/04, B23K 26/21, H01M 50/107

(54) **BATTERY CELL, BATTERY PACK COMPRISING SAME, VEHICLE, AND MANUFACTURING METHOD THEREFOR**

(30) Priority: 22.12.2023 KR 20230190298; 08.10.2024 KR 20240136987
(71) Applicant: LG Energy Solution, Ltd., Seoul 07335 (KR)
(72) Inventor: PARK, Kyeong-Hoon, Daejeon 34122 (KR); LEE, Je-Jun, Daejeon 34122 (KR)
(74) Representative: Goddar, Heinz J.
(86) International application number: PCT/KR2024/016194
(87) International publication number: WO 2025/135447

(57) **Abstract**

Provided are a battery cell, a battery pack including the same, a vehicle, and a manufacturing method thereof, which may prevent damage due to welding heat. The battery cell includes a can with an open end on one side, an electrode assembly accommodated inside the can, a current collecting plate electrically connected to the electrode assembly, a cap covering the open end of the can, and a welding portion where the can and the cap are adhered to each other through welding, wherein the can includes a beading portion formed by press-fitting a side portion of the can inward along a circumference near the open end of the can, and a crimping portion formed by bending a side portion of the can inward along a circumference of the open end to surround and fix an edge of the cap.

## Description

### TECHNICAL FIELD

The present disclosure relates to a battery cell, a battery pack including the same, a vehicle, and a manufacturing method thereof, and more particularly, to a battery cell, a battery pack including the same, a vehicle, and a manufacturing method thereof, which may prevent damage due to welding heat. This application is based on and claims priority from Korean Patent Application No. 10-2023-0190298, filed on December 22, 2023, with the Korean Intellectual Property Office, the disclosure of which is incorporated herein in its entirety by reference.

This application is based on and claims priority from Korean Patent Application No. 10-2024-0136987, filed on October 8, 2024, with the Korean Intellectual Property Office, the disclosure of which is incorporated herein in its entirety by reference.

### BACKGROUND ART

Secondary batteries have high applicability according to product groups and electrical characteristics such as high energy density, and thus, are commonly applied not only to mobile devices but also to electric vehicles (EVs) or hybrid vehicles (HEVs) driven by electric power sources. Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage or charge/discharge capacity.

A process of manufacturing a battery cell using a cylindrical can includes deep drawing a metal sheet to form a bottom portion having a circular shape and a side wall member having a circular tubular shape and connected to the bottom portion, accommodating an electrode assembly therein, and covering an open end of the side wall member with a cap. A current collecting plate contacting and electrically connected to an electrode tab of the electrode assembly is provided at one of both ends of the electrode assembly in an axial direction facing the open end. The current collecting plate is connected to the cap or the side wall member through welding or the like so that the current collecting plate contacts and is electrically connected to the cap or the side wall member.

That is, in a process of welding the current collecting plate to the cap or the side wall member, the current collecting plate should be maintained in close contact with the cap or the side wall member. However, in general, to this end, a jig is required to closely attach the current collecting plate to the cap or the current collecting plate to the side wall member, and in addition, a mask is required to expose a welding portion. In this case, in order to closely attach the current collecting plate to the cap or the side wall member through the mask or the jig, a space for accommodating the mask or the jig should be provided inside the can. However, the space remains as an empty space after the mask or the jig is removed, and thus, the internal volume of the can may not be efficiently utilized.

Accordingly, a method of performing welding in a state where a cap is press-fitted while being closely attached to a current collecting plate or a can without a mask or a jig has been studied. However, this welding method is also cumbersome in that tack welding of temporarily fixing components to be welded has to be performed prior to a welding process. Also, when a component tolerance or an assembly error occurs, due to a tolerance of a fastening portion between the can, the current collecting plate, and the cap, a welding laser beam may be directly irradiated into the can, thereby damaging an electrode assembly.

In particular, in order to weld a side wall member of the can, the cap, and the current collecting plate at once, a large amount of thermal energy should be generated to melt all contact portions between them. Such excessive welding heat may be transferred to a separator of the electrode assembly, and may cause degradation such as melting or pore closing of the separator, or decomposition.

Also, in order to seal an edge of the can and an edge of the cap through welding, an electrolyte, etc. should not remain in a welding portion. Accordingly, a process of cleaning a portion where welding is to be performed after electrolyte injection should be added. In order to avoid the inconvenience of the cleaning process, a method of sealing the can and the cap and then injecting the electrolyte may be considered. However, this method also has the inconvenience of having to seal an opening of the can with the cap, inject the electrolyte through a separate injection port, and then close the injection port again.

Accordingly, there is a need for research on a battery cell structure that may prevent damage to an electrode assembly due to welding heat and does not require a separate electrolyte cleaning process, in a welding process of a process of manufacturing a battery cell.

### DISCLOSURE

### Technical Problem

Therefore, the present disclosure is directed to providing a battery cell, a battery pack including the same, a vehicle, and a manufacturing method thereof, which prevent welding heat from affecting an electrode assembly.

Also, the present disclosure is directed to providing a battery cell, a battery pack including the same, a vehicle, and a manufacturing method thereof, where there is no risk of damaging an electrode assembly even when a dimensional error of a component or an assembly error of components occurs.

Also, the present disclosure is directed to providing a battery cell, a battery pack including the same, a vehicle, and a manufacturing method thereof, which may smoothly perform a welding process without an additional process such as tack welding or installation of a jig or the like.

Also, the present disclosure is directed to providing a battery cell, a battery pack including the same, a vehicle, and a manufacturing method thereof, which do not require a separate process of cleaning a welding portion.

Also, the present disclosure is directed to providing a battery cell, a battery pack including the same, a vehicle, and a manufacturing method thereof, which may achieve weight reduction by omitting a gasket for sealing or insulation.

Also, the present disclosure is directed to providing a battery cell, a battery pack including the same, a vehicle, and a manufacturing method thereof, which may sufficiently ensure the sealing performance of a can.

However, technical problems to be solved by the present disclosure are not limited to the above-described problems, and other unmentioned problems may be clearly understood by one of ordinary skill in the art from the following description of the present disclosure.

### Technical Solution

In one aspect of the present disclosure, there is provided a battery cell including a can with an open end on one side, an electrode assembly accommodated inside the can, a current collecting plate electrically connected to the electrode assembly, a cap covering the open end of the can, and a welding portion where the can and the cap are adhered to each other through welding, wherein the can includes a beading portion formed by press-fitting a side portion of the can inward along a circumference near the open end of the can, and a crimping portion formed by bending a side portion of the can inward along a circumference of the open end to surround and fix an edge of the cap.

Also, preferably, the beading portion may include a lower inclined recessed portion extending downward as it goes inward, and an upper inclined recessed portion connected to the lower inclined recessed portion and extending upward as it goes inward.

Also, preferably, the beading portion may have a shape in which each of the lower inclined recessed portion and the upper inclined recessed portion is inclined at a certain angle.

Also, preferably, the current collecting plate may include a can connection portion disposed between the edge of the cap and the crimping portion.

Also, preferably, the can connection portion may have a ring shape.

Also, preferably, the can connection portion may have a closed loop shape.

Also, preferably, the current collecting plate may include an outward extension portion extending upward as it goes outward.

Also, preferably, the outward extension portion may be in contact with the beading portion.

Also, preferably, the current collecting plate may include a direction changing portion bent inward.

Also, preferably, the direction changing portion may be disposed between a top surface of the cap and a bottom surface of a bent part of the crimping portion.

Also, preferably, at least a part of the direction changing portion may extend inward beyond the bent part of the crimping portion.

Also, preferably, the welding portion may be seam welded in a bent part or an outermost part of the crimping portion.

Also, preferably, the welding portion may be welded together with at least a part of the current collecting plate.

Also, preferably, the welding portion may include at least one of a first welding portion welded along an end of a bent part of the crimping portion, and a second welding portion welded along a vicinity of the end of the bent part of the crimping portion.

Also, preferably, the welding portion may include a plurality of welding portions, and at least one welding portion may have a closed-curve welding shape.

Also, preferably, the welding portion may include a plurality of welding portions with different penetration depths.

Also, preferably, a welding position or a penetration depth of the welding portion may vary according to a shape of the current collecting plate.

Also, in another aspect of the present disclosure, there is provided a battery pack including at least one battery cell described above.

Also, in another aspect of the present disclosure, there is provided a vehicle including at least one battery pack described above.

Also, in another aspect of the present disclosure, there is provided a method of manufacturing a battery cell, the method including accommodating an electrode assembly connected to a current collecting plate in a can, beading a side portion of the can, inserting a cap into an open end of the can, crimping and sealing the open end of the can, and performing double sealing by welding an area where an upper portion of the cap and the can overlap each other.

Also, preferably, the method of manufacturing a battery cell may further include injecting an electrolyte into the can before or after the beading.

Also, preferably, the performing of the double sealing may include welding the current collecting plate, the cap, and the can together.

Also, preferably, the performing of the double sealing may include performing seam welding so that penetration depths of a plurality of welding portions are same or different from each other.

### Advantageous Effects

A battery cell, a battery pack including the same, a vehicle, and a manufacturing method thereof according to various embodiments of the present disclosure may prevent adverse effects of welding heat on the battery cell.

Also, a battery cell, a battery pack including the same, a vehicle, and a manufacturing method thereof according to various embodiments may simultaneously achieve electrical connection between a can and a current collecting plate and sealing of a cap.

Also, a battery cell, a battery pack including the same, a vehicle, and a manufacturing method thereof according to various embodiments may ensure weldability, stability, and durability.

Also, a battery cell, a battery pack including the same, a vehicle, and a manufacturing method thereof according to various embodiments may reduce welding man-hours of the battery cell.

Also, a battery cell, a battery pack including the same, a vehicle, and a manufacturing method thereof according to various embodiments may increase the energy density of a battery cell by ensuring the maximum volume of an electrode assembly accommodated inside a can.

Also, a battery cell, a battery pack including the same, a vehicle, and a manufacturing method thereof according to various embodiments do not require a separate cleaning process for a welding process.

However, effects obtainable from the present disclosure may not be limited by the above-described effects. Other unmentioned effects may be clearly understood from the following description by one of ordinary skill in the art to which the present disclosure pertains.

### DESCRIPTION OF DRAWINGS

FIG. 1 is a view schematically illustrating a can of a battery cell according to an embodiment of the present disclosure.
FIG. 2 is a view schematically illustrating an electrode assembly of a battery cell according to an embodiment of the present disclosure.
FIG. 3 is a view for describing elements of the electrode assembly of FIG. 2.
FIG. 4 is a view for describing a state where the elements of the electrode assembly of FIG. 3 are stacked.
FIG. 5 is a view schematically illustrating a state where a current collecting plate is adhered to one end of the electrode assembly of FIG. 4.
FIG. 6 is a view schematically illustrating a state where a current collecting plate is adhered to the other end of the electrode assembly of FIG. 4.
FIG. 7 is a view schematically illustrating a current collecting plate of a battery cell according to an embodiment of the present disclosure.
FIG. 8 is a view schematically illustrating a current collecting plate of a battery cell according to another embodiment of the present disclosure.
FIG. 9 is a view for describing a process of accommodating an electrode assembly of a battery cell inside a can according to an embodiment of the present disclosure.
FIG. 10 is a view for describing a process of forming a beading portion on a can of a battery cell and adhering a current collecting plate to an electrode terminal according to an embodiment of the present disclosure.
FIG. 11 is a view for describing a process of covering an open end of a can of a battery cell with a cap according to an embodiment of the present disclosure.
FIG. 12 is a view for describing a process of forming a crimping portion on a can of a battery cell according to an embodiment of the present disclosure.
FIG. 13 is a view for describing an exemplary relationship between a beading portion and a current collecting plate at a portion F of FIG. 12.
FIG. 14 is a view for describing another exemplary relationship between the beading portion and the current collecting plate at the portion F of FIG. 12.
FIG. 15 is a top view schematically illustrating a current collecting plate of a battery cell according to an embodiment of the present disclosure.
FIG. 16 is a top view schematically illustrating a current collecting plate of a battery cell according to another embodiment of the present disclosure.
FIG. 17 is a top view schematically illustrating a current collecting plate of a battery cell according to still another embodiment of the present disclosure.
FIG. 18 is a view for describing an exemplary arrangement of a crimping portion of a can and a current collecting plate at the portion F of FIG. 12.
FIG. 19 is a view for describing another exemplary arrangement of the crimping portion of the can and the current collecting plate at the portion F of FIG. 12.
FIG. 20 is a view illustrating a position of a welding portion of a battery cell according to an embodiment of the present disclosure.
FIG. 21 is a view illustrating a penetration depth of a welding portion of a battery cell according to an embodiment of the present disclosure.
FIG. 22 is a view illustrating a welding shape of a welding portion of a battery cell according to an embodiment of the present disclosure.
FIG. 23 is a view illustrating a welding shape of a welding portion of a battery cell according to another embodiment of the present disclosure.
FIG. 24 is a flowchart illustrating a process of manufacturing a battery cell according to an embodiment of the present disclosure.
FIG. 25 is a view schematically illustrating a battery pack including a battery cell according to an embodiment of the present disclosure.
FIG. 26 is a view schematically illustrating a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

Also, the present disclosure includes various embodiments. A repeated description of components substantially the same as or similar to those of previous embodiments will be omitted, and a difference will be mainly described.

In addition, in order to help understand the present disclosure, the accompanying drawings are not drawn to scale, but dimensions of some components may be exaggerated. Also, the same reference numerals may be assigned to the same components in different embodiments.

As used herein, the singular forms are intended to include the plural forms as well, unless the context clearly indicates otherwise.

If components are described as "connected", "coupled", or "linked" to another component, it may mean that the components are directly "connected", "coupled", or "linked" or are indirectly "connected", "coupled", or "linked" via a third component.

The singular forms "a," "an," and "the" as used herein are intended to include the plural forms as well unless the context clearly indicates differently. That is, the terms 'constituting', 'comprising', or 'including', as used herein, should not be construed as necessarily including various elements or steps described in the specification, but it is to be understood that some components or some steps may not be included, or that additional components or steps may be included therein.

When "A and/or B" throughout the specification, it means A, B, or both A and B unless otherwise described.

It will be understood by one of ordinary skill in the art that when terms indicating directions such as upper, lower, left, right, front, and rear are used, these terms are only for convenience of explanation and may vary according to the position, arrangement, and rotation of a target object, the position of an observer, etc.

Hereinafter, a battery cell 1 according to various embodiments of the present disclosure will be described in detail.

First, the battery cell 1 may be a cylindrical battery cell. Preferably, the battery cell 1 may be, for example, a cylindrical battery cell in which a form factor ratio (defined as a value obtained by dividing a diameter of the cylindrical battery cell by a height, that is, a ratio between a height H and a diameter Φ) is greater than about 0.4.

The term "form factor" used herein may refer to a value indicating a diameter and a height of a cylindrical battery cell. The cylindrical battery cell may be a 46110 cell, a 48750 cell, a 48110 cell, a 48800 cell, or a 46800 cell by applying a numerical value indicating a form factor. Here, first two numbers indicate a diameter of a cell, next two numbers indicate a height of the cell, and a last number 0 indicates that a cross-section of the cell is circular.

Also, the battery cell 1 may be applied to cylindrical battery cells having a form factor ratio of about 0.4 or less, such as a18650 cell and a 21700 cell, and a type of the battery cell 1 is not limited to a cylindrical battery cell.

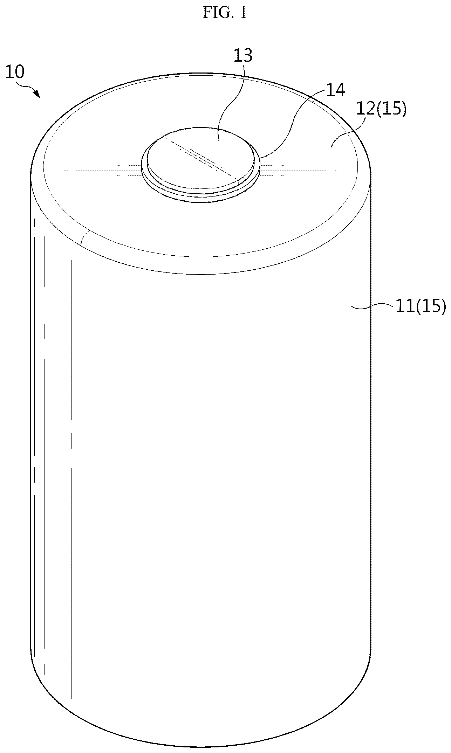

FIG. 1 is a view schematically illustrating a can 10 of the battery cell 1 according to an embodiment of the present disclosure. The battery cell 1 according to an embodiment of the present disclosure may include the can 10 with one side open.

Referring to FIG. 1, the can 10 may include a side wall member 11 and a bottom member 12.

The can 10 may have a cylindrical shape for the cylindrical battery cell. In this case, the side wall member 11 may form a side surface of the cylinder of the can 10 having a cylindrical shape, and the bottom member 12 may form one end of the cylinder. That is, the bottom member 12 may become a closed end of the can 10, and the other end of the can 10 facing the bottom member 12 may be an open end.

The bottom member 12 may have a disk shape having a through-hole formed at the center, and may be a member formed by deep drawing a metal sheet having nickel plated on a surface of steel.

The side wall member 11 may have a tubular shape surrounding the bottom member 12, and may be a member formed by deep drawing a metal sheet having nickel plated on a surface of steel. However, materials of the bottom member 12 and the side wall member 11 are not limited thereto.

A first electrode terminal 13 may be inserted into the through-hole of the bottom member 12. The first electrode terminal 13 may be riveted and fixed to the bottom member 12 with a gasket 14 therebetween. The gasket 14 may be disposed between the first electrode terminal 13 and the bottom member 12 to seal the inside of the can 10, prevent leakage of an electrolyte, and electrically insulate the first electrode terminal 13 from the bottom member 12.

However, a method of connecting the first electrode terminal 13 to the bottom member 12 is not limited thereto. For example, as long as a gap between the first electrode terminal 13 and the bottom member 12 may be sealed and the first electrode terminal 13 may be electrically insulated from the bottom member 12, any of various other fixing methods, for example, a bolt-nut coupling method, a glass seal method, or a chromium coating & PP-MAH thermal bonding method, may be applied.

Accordingly, the first electrode terminal 13 may have a first polarity, and the can 10 may have a second polarity. That is, both the bottom member 12 and the side wall member 11 connected to the bottom member 12 may have the second polarity. Accordingly, both the first electrode terminal 13 having the first polarity and a second electrode terminal 15 having the second polarity may be arranged on the bottom member 12. The first electrode terminal 13 may be a positive electrode terminal and the second electrode terminal 15 may be a negative electrode terminal, or vice versa.

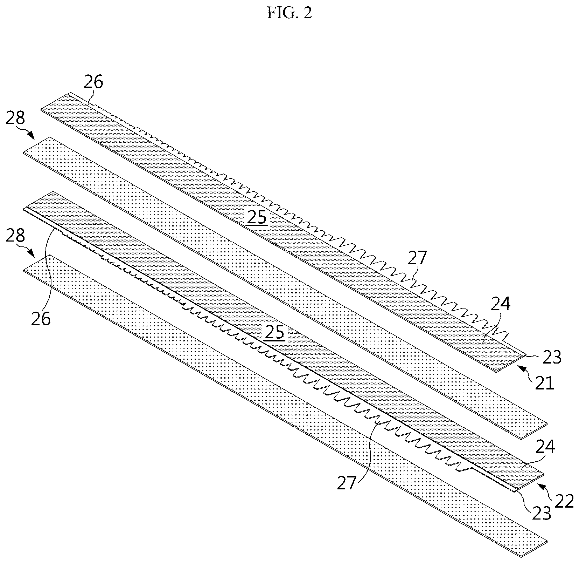

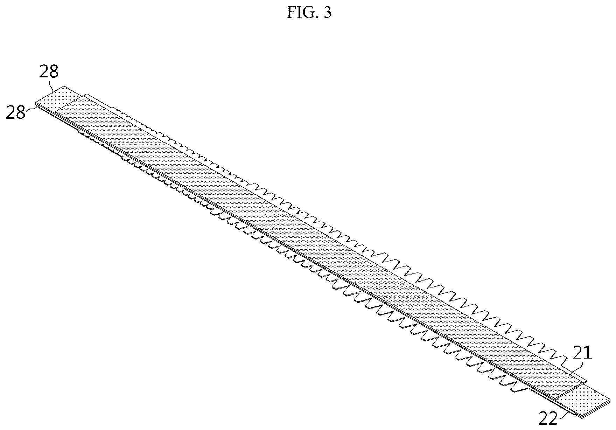

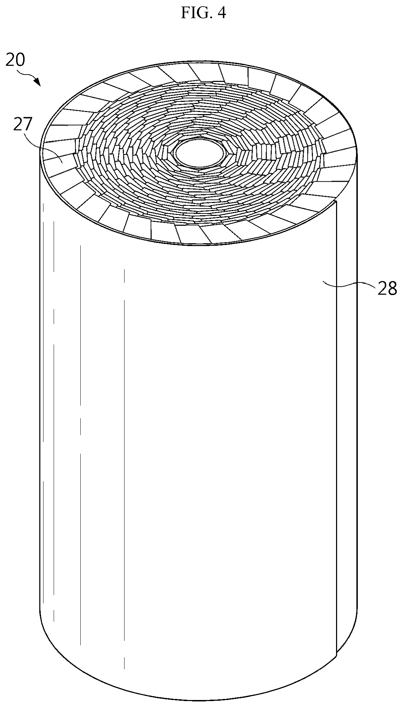

FIG. 2 is a view schematically illustrating an electrode assembly 20 of the battery cell 1 according to an embodiment of the present disclosure. FIG. 3 is a view for describing elements of the electrode assembly 20 of FIG. 2. FIG. 4 is a view for describing a state where the elements of the electrode assembly 20 of FIG. 3 are stacked.

The battery cell 1 according to an embodiment of the present disclosure may include the electrode assembly 20 accommodated inside the can 10.

Referring to FIGS. 2 to 4, the electrode assembly 20 may be manufactured in a jelly-roll shape in which first and second electrodes 21, 22 and a separator 28 are wound around a core shaft.

Each of the first electrode 21, the second electrode 22, and the separator 28 may have a certain width and may extend in a longitudinal direction. The first electrode 21 may be a positive electrode and the second electrode 22 may be a negative electrode, or vice versa.

The first electrode 21 and the second electrode 22 may be manufactured in a sheet shape. The electrode sheet may be formed by applying an active material layer 24 on a surface of at least a part of a surface of a metal foil 23. The electrode sheet may include a coated portion 25 to which the active material layer 24 is applied and an uncoated portion 26 to which the active material layer 24 is not applied. A positive electrode sheet may include the uncoating portion 26 on one side in a width direction, and a negative electrode sheet may include the uncoated portion 26 on the other side in the width direction.

The uncoated portion 26 itself may function as an electrode tab.

The uncoated portion 26 may include a plurality of notching tabs 27 of a flag shape formed by forming notches at certain intervals. The plurality of notching tabs 27 may have equilateral trapezoidal shapes arranged along the longitudinal direction. However, the present disclosure is not limited thereto, and the plurality of notching tabs 27 may have any of various shapes such as semicircular shapes, semi-elliptical shapes, triangular shapes, rectangular shapes, or parallelogram shapes.

Also, the plurality of notching tabs 27 may have the same width. However, widths of the plurality of notching tabs 27 may gradually or stepwise increase from the core to an outer circumference.

Also, heights of the plurality of notching tabs 27 may gradually increase from the core to the outer circumference. Alternatively, heights of the plurality of notching tabs 27 may be constant or may gradually decrease.

Also, the plurality of notching tabs 27 may be deleted in a certain portion of a centripetal end of the uncoated portion 26 and a certain portion of a centrifugal end of the uncoated portion 26. Alternatively, the notching tabs 27 may not be deleted in the centripetal end of the uncoated portion 26, or the notching tabs 27 may not be deleted in the centrifugal end of the uncoated portion 26.

Also, the plurality of notching tabs 27 may be bent in a radial direction in the electrode assembly 20 and flattened. Also, the notching tab 27 may be bent inward or outward in the radial direction in the electrode assembly 20.

Also, the plurality of notching tabs 27 may be bent one by one during a process of forming the electrode assembly 20 having a jelly-roll shape. Unlike this, the notching tabs 27 may be bent at once after the electrode assembly 20 having a jelly-roll shape is formed.

As such, each of the notching tabs 27 of the first electrode 21 and the notching tabs 27 of the second electrode 22 which are bent and overlapped in the radial direction may provide a plane substantially perpendicular to an axial direction at each of both ends of the electrode assembly 20 in the axial direction.

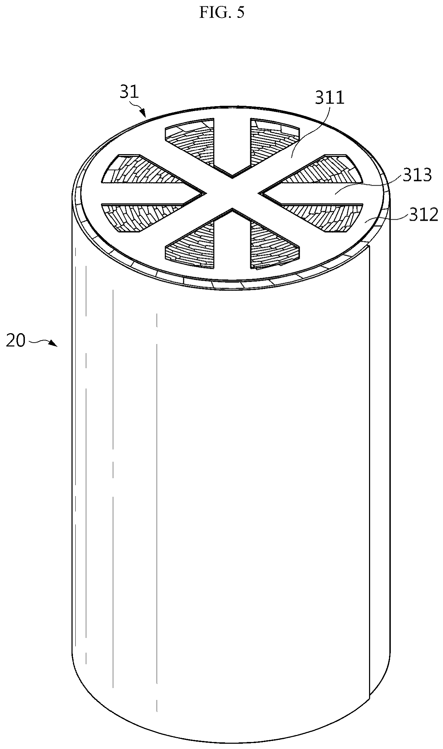

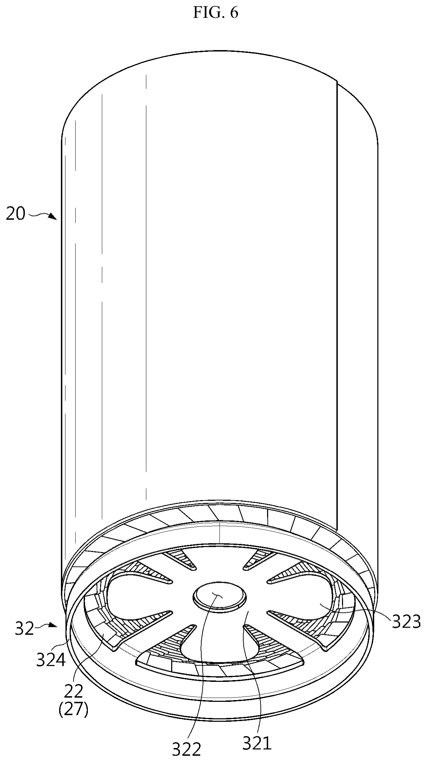

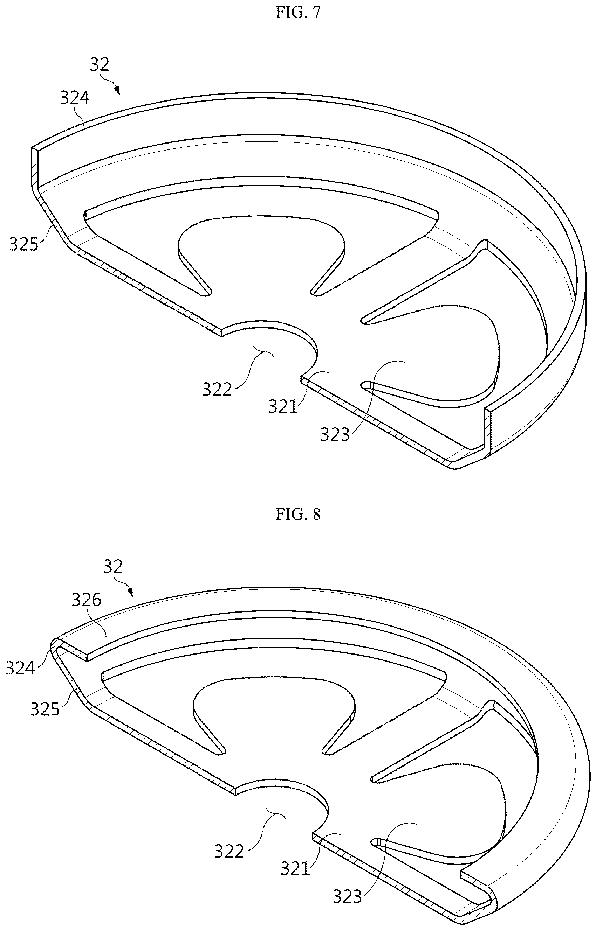

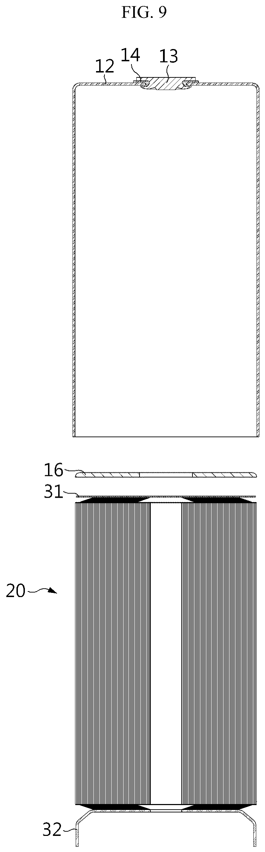

FIG. 5 is a view schematically illustrating a state where a first current collecting plate 31 is adhered to one end of the electrode assembly 20 of FIG. 4. FIG. 6 is a view schematically illustrating a state where a second current collecting plate 32 is adhered to the other end of the electrode assembly 20 of FIG. 4. FIG. 7 is a view schematically illustrating the second current collecting plate 32 of the battery cell 1 according to an embodiment of the present disclosure. FIG. 8 is a view schematically illustrating the second current collecting plate 32 of the battery cell 1 according to another embodiment of the present disclosure. FIG. 9 is a view for describing a process of accommodating the electrode assembly 20 of the battery cell 1 inside the can 10 according to an embodiment of the present disclosure.

The battery cell 1 according to an embodiment of the present disclosure may include the first and second current collecting plates 31, 32 electrically connected to the electrode assembly 20.

Referring to FIGS. 5 and 6, a current collecting plate 30 may be electrically connected to at least one end of the electrode assembly 20 in the axial direction.

The current collecting plate 30 may include the first current collecting plate 31 electrically connected to the first electrode 21, and the second current collecting plate 32 electrically connected to the second electrode 22.

The first current collecting plate 31 and the second current collecting plate 32 may be respectively adhered to substantially flat surfaces provided when the notching tabs 27 exposed at both ends of the electrode assembly 20 in the axial direction are bent. The first current collecting plate 31 may be a positive electrode current collecting plate formed of aluminum, and the second current collecting plate 32 may be a negative electrode current collecting plate formed of copper. However, materials of the first and second current collecting plates 31, 32 need not be limited thereto. Also, the first and second current collecting plates 31, 32 may be manufactured by punching, trimming, piercing, and bending metal sheets, but a manufacturing method is not limited thereto.

Here, the first current collecting plate 31 and the second current collecting plate 32 may have the same structure or different structures. Although the first current collecting plate 31 and the second current collecting plate 32 have different structures in FIGS. 5 and 6, the present disclosure is not limited thereto. Also, the present disclosure is not limited to an exemplary shape of each element illustrated in the drawing, and each element may have any of various shapes.

The first current collecting plate 31 may include a terminal connection portion 311 and an electrode connection portion 313.

The terminal connection portion 311 may radially extend from the center of the first current collecting plate 31 to cover at least a part of a core hollow portion of the electrode assembly 20. The first current collecting plate 31 may further include a ring portion 312 configured to connect a centrifugal edge of the terminal connection portion 311 in a circumferential direction.

The electrode connection portion 313 may extend from the ring portion 312 toward the center, but may not be connected to the terminal connection portion 311. In this case, the electrode connection portion 313 may be adhered to the notching tabs 27 of the first electrode 21 of the electrode assembly 20 by using laser welding or the like, before the electrode assembly 20 is put into the can 10. A laser welding line may radially extend.

The second current collecting plate 32 may include an inner ring portion 321, a hole 322, an electrode connection portion 323, and a can connection portion 324.

The inner ring portion 321 may surround the core hollow portion of the electrode assembly 20, and the hole 322 may be open to correspond to the core hollow portion of the electrode assembly 20.

The electrode connection portion 323 may radially extend from the inner ring portion 321. In this case, the electrode connection portion 323 may be adhered to the notching tabs 27 of the second electrode 22 of the electrode assembly 20 by using laser welding or the like, before the electrode assembly 20 is put into the can 10. A laser welding line may radially extend.

The can connection portion 324 may be formed on an edge or at least a part around the edge of the second current collecting plate 32 to be connected to the second current collecting plate 32 inside the can 10.

Referring to FIGS. 7 and 8, the can connection portion 324 may include an outward extension portion 325, and the outward extension portion 325 and a direction changing portion 326.

The outward extension portion 325 may extend from the electrode connection portion 323 and the inner ring portion 321 outward in the radial direction.

The outward extension portion 325 may have a shape that is inclined at a certain angle to extend outward in the axial direction as the outward extension portion 325 extends outward in the radial direction. This structure may facilitate connection or adhesion between the second current collecting plate 32 and the can 10, inside the can 10.

The direction changing portion 326 may extend by a certain length from a radially outer end of the outward extension portion 325.

The direction changing portion 326 may be formed at an angle that is the same as or different from an angle at which the outward extension portion 325 extends. For example, the direction changing portion 326 may extend outward in the axial direction or may extend long in the axial direction. In this case, when a crimping portion 120 described below is formed, the direction changing portion 326 may be bent together with the crimping portion 120 of the can 10 and may extend to be bent inward in the radial direction. This structure may facilitate the assembly of the can 10 and a cap 40 described below at once and may further reduce an assembly error.

Also, the direction changing portion 326 may be formed in a bent shape and may extend inward in the radial direction before a crimping process described below is performed. This structure may allow the second current collecting plate 32 to be bent inward in the radial direction to perform a crimping process at a preset angle.

Referring to FIG. 9, the first current collecting plate 31 and the second current collecting plate 32 may be adhered to the electrode assembly 20 before the electrode assembly 20 is put into the can 10, as described above. Alternatively, after the electrode assembly 20 to which only the first current collecting plate 31 is adhered is put into the can 10, the second current collecting plate 32 may inserted into the can 10 and adhered to the electrode assembly 20.

The electrode assembly 20 may be accommodated inside the can 10 in a state where the first current collecting plate 31 is aligned to face the bottom member 12 of the can 10.

In this case, an insulator 16 may be disposed between the first current collecting plate 31 and the bottom member 12 of the can 10. This structure may electrically insulate the first current collecting plate 31 from the bottom member 12. In this case, at least a part of the can connection portion 324 of the second current collecting plate 32 may contact an inner circumferential surface of the side wall member 11. Also, the second current collecting plate 32 may be disposed to face an open end of the side wall member 11.

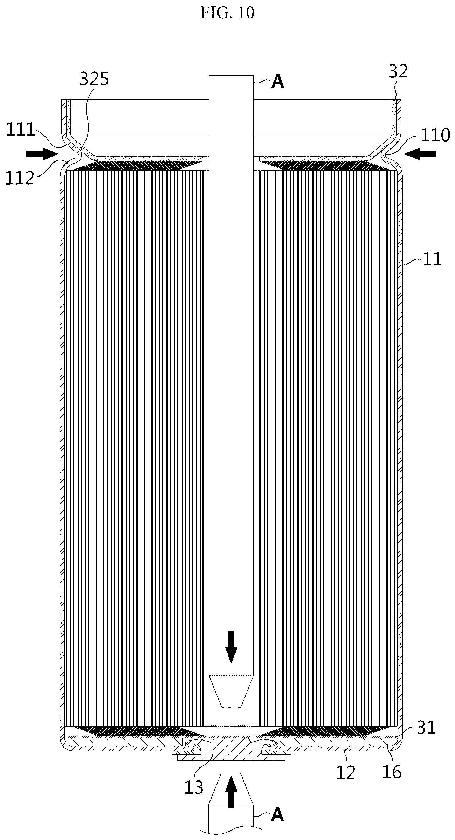

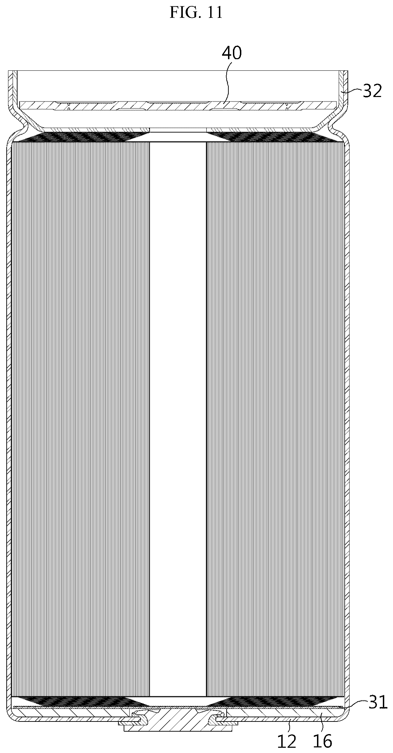

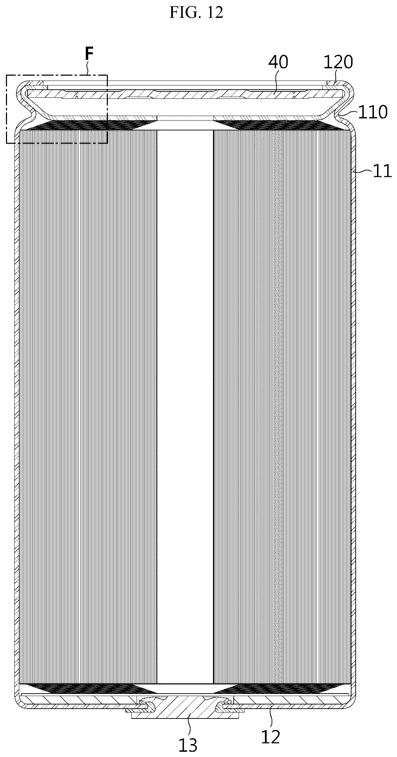

FIG. 10 is a view for describing a process of forming a beading portion 110 on the can 10 of the battery cell 1 and adhering the current collecting plate 30 to the first and second electrode terminals 13, 15 according to an embodiment of the present disclosure. FIG. 11 is a view for describing a process of covering an open end of the can 10 of the battery cell 1 with the cap 40 according to an embodiment of the present disclosure. FIG. 12 is a view for describing a process of forming the crimping portion 120 on the can 10 of the battery cell 1 according to an embodiment of the present disclosure.

Referring to FIGS. 10 to 12, the battery cell 1 according to an embodiment of the present disclosure may include the beading portion 110 of the can 10, the cap 40, and the crimping portion 120 of the can 10 as a configuration for sealing the inside of the can 10.

The beading portion 110 of the can 10 may be formed by press-fitting a side portion of the can 10 inward to a certain extent along a circumference near the open end of the can 10. Accordingly, in a state where the electrode assembly 20 is accommodated in the can 10, a position of the electrode assembly 20 may be regulated to a certain extent, and a process of sealing the inside of the can 10 later may be facilitated.

In this case, the terminal connection portion 311 of the first current collecting plate 31 may be adhered to the first electrode terminal 13 coupled to the can 10 by using a method such as resistance welding, ultrasonic welding, or laser welding. A welding device A for welding the first current collecting plate 31 to the first electrode terminal 13 may perform welding by approaching a rear surface of the center of the terminal connection portion 311 of the first current collecting plate 31 through the core hollow portion of the electrode assembly 20 from the open end of the can 10. Alternatively, the first current collecting plate 31 may be adhered to the first electrode terminal 13 by using any of other methods such as brazing or soldering. That is, the first current collecting plate 31 and the first electrode terminal 13 may be coupled to each other in various ways as long as the first current collecting plate 31 and the first electrode terminal 13 are electrically connected and fixed to each other.

Accordingly, in the battery cell 1 according to an embodiment of the present disclosure, the beading portion 110 may be formed on the can 10, the first current collecting plate 31 and the first electrode terminal 13 may be coupled to each other, and then an electrolyte may be injected into the can 10. Accordingly, after the inside of the can 10 is sealed, a process of injecting an electrolyte through a separate injection port and closing the injection port or a cleaning process for welding may not be added, thereby simplifying the overall process.

The cap 40 may be configured to cover the open end of the can 10.

That is, the cap 40 may have a cover structure that effectively seals the open end of the can 10 to protect an internal electrolyte and an electrode portion of the battery cell 1 from an external environment and maintain the long-term performance of the battery cell 1.

The can 40 may be mainly formed of a metallic material for electrical connection with the second current collecting plate 32.

The cap 40 may have a disk shape to be fixed to the open end of the can 10 or to seal the open end of the can 10, but the present disclosure is not limited thereto. Also, the cap 40 may have a thickness that may provide sufficient strength to prevent deformation in a high temperature or high pressure environment, and may ensure durability to prevent leakage of the internal electrolyte. In this case, an edge of the cap 40 may be disposed near an edge of the second current collecting plate 32 or on the outward extension portion 325 of the second current collecting plate 32.

The crimping portion 120 of the can 10 may be formed by bending a side portion of the can 10 inward along a circumference of the open end of the can 10. In this case, the crimping portion 120 of the can 10 may surround and fix the edge of the cap 40.

Accordingly, the battery cell 1 according to an embodiment of the present disclosure may compress and closely attach components of the battery cell 11 through a crimping process even when a dimensional error of a component or an assembly error between components occurs.

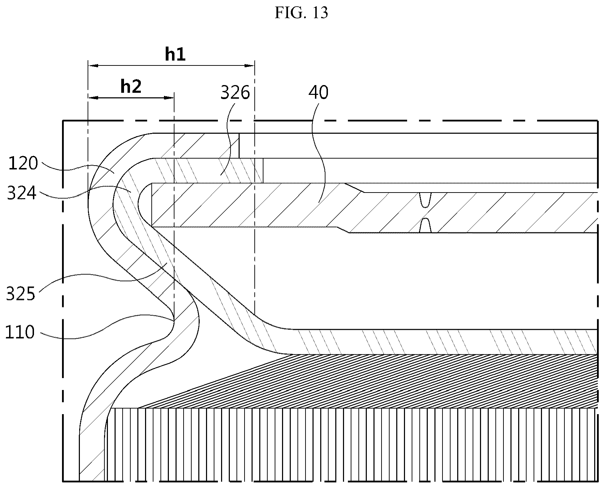

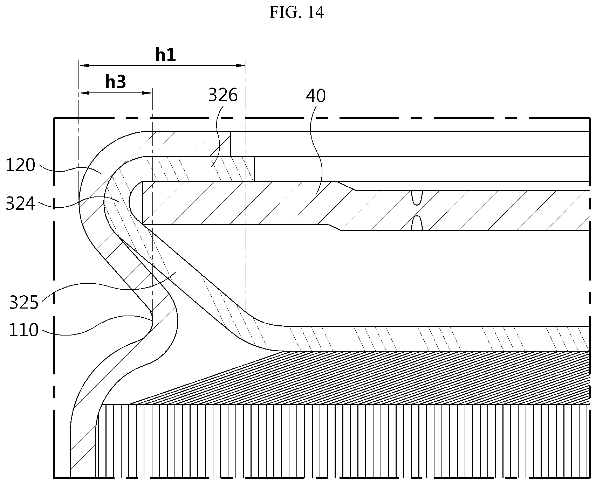

FIGS. 13 and 14 are views for describing an exemplary relationship between the beading portion 110 of the can 10 and the current collecting plate 30 at a portion F of FIG. 12.

Referring to FIGS. 13 and 14, the beading portion 110 of the can 10 may be formed by recessing a side portion of the can 10 inward in the radial direction so as not to have a flat surface perpendicular to the axial direction.

The beading portion 110 of the can 10 may have a shape inclined at a certain angle. That is, the beading portion 110 of the can 10 does not need to provide a pressing surface by itself enough to seal the cap 40 to the can 10. When the crimping portion 120 of the can 10 is formed, it is sufficient if the beading portion 110 supports a compressive force of the cap 40 applied inward in the axial direction by the crimping portion 120 of the can 10. For example, because the beading portion 110 may be formed to have an indentation depth h2 that may maintain an inclined shape at a certain angle, instead of an indentation depth h1 that was required in the prior art, the beading portion 110 may reduce pressure applied to the can 10.

Accordingly, the beading portion 110 of the can 10 may include a lower inclined recessed portion 111 extending downward as it goes inward, and an upper inclined recessed portion 112 connected to the lower inclined recessed portion 111 and extending upward as it goes inward.

The lower inclined recessed portion 111 and the upper inclined recessed portion 112 may each be formed as an inclined surface inclined at a certain angle so that the beading portion 110 of the can 10 does not have a flat surface perpendicular to the axial direction.

Accordingly, in the battery cell 1 according to an embodiment of the present disclosure, because a forming or indentation depth of the beading portion 110 of the can 10 may be shallow, the durability of the beading portion 110 of the can 10 may not be weakened.

The beading portion 110 of the can 10 may be formed in a state where the second current collecting plate 32 is adhered to the electrode assembly 20, as described above. In this case, the second current collecting plate 32 may be press-fitted between the outward extension portion 325 and the electrode assembly 20.

In a beading process, the beading portion 110 of the can 10 may contact a bottom surface of the outward extension portion 325 of the second current collecting plate 32. That is, the outward extension portion 325 of the second current collecting plate 32 may contact the beading portion 110 of the can 10. Accordingly, because the second current collecting plate 32 and the beading portion 110 of the can 10 are more closely attached, pressure in a crimping process may be more effectively supported.

Also, the beading portion 110 of the can 10 may be press-fitted to a certain depth to support the bottom surface of the outward extension portion 325 of the second current collecting plate 32 to a certain extent, without completely contacting the outward extension portion 325 of the second current collecting plate 32. For example, because the beading portion 110 may be formed to have an indentation depth h3 that may maintain an inclined shape at a certain angle, without completely contacting the outward extension portion 325 of the second current collecting plate 32, instead of the indentation depth h1 that was required in the prior art, the beading portion 110 may further reduce pressure applied to the can 10. Accordingly, because the crimping portion 120 of the can 10 may surround and sufficiently support the edge of the cap 40, excessive forming of the beading portion 110 of the can 10 may not be required.

Accordingly, in the battery cell 1 according to the present embodiment, the durability of the beading portion 110 of the can 10 may be protected, and thus, the lifespan of the battery cell 1 may be extended.

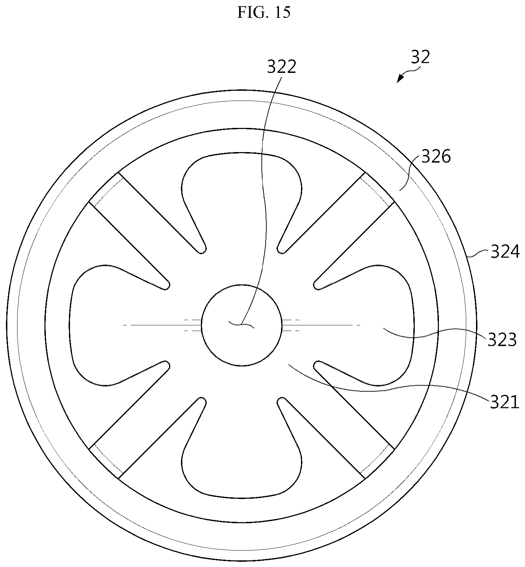

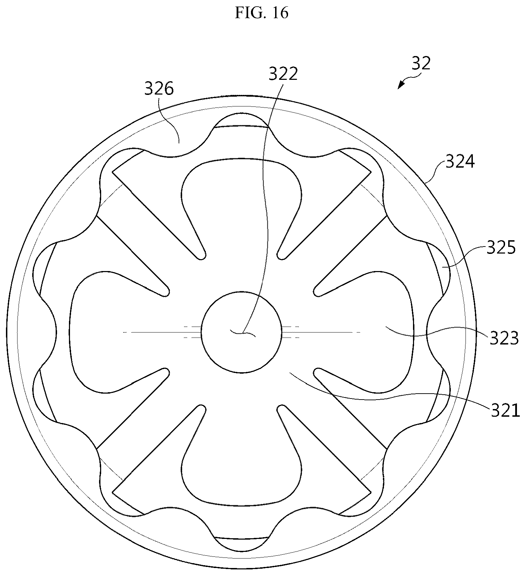

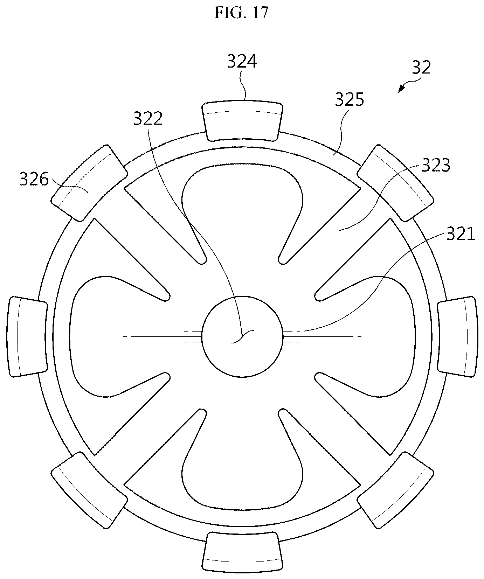

FIGS. 15 to 17 are top views schematically illustrating the current collecting plate 30 of the battery cell 1 according to an embodiment of the present disclosure.

The current collecting plate 30 may include the can connection portion 324 that may be electrically connected to the can 10, as described above.

Referring to FIGS. 15 to 17, the can connection portion 324 may have any of various structures disposed between an edge of the cap 40 and the crimping portion 120 of the can 10 to be electrically connected to the can 10.

For example, the can connection portion 324 may have a ring shape or a closed loop shape. The closed loop shape may be a closed loop shape formed on an outer circumference of the crimping portion 120 of the can 10. In particular, structural integrity for sealing may be maintained and unnecessary damage may be prevented by providing strength and durability.

Because the can connection portion 324 may be formed of a metallic material, the can connection portion 324 may be electrically connected to the can 10 and the cap 40. Also, the can connection portion 324 may have an appropriate size corresponding to an outer circumferential surface of the open end of the can 10. Accordingly, integrity may be ensured in a process of manufacturing the battery cell 1 and stable sealing may be maintained without deformation even during long-term storage.

Accordingly, in the battery cell 1 according to an embodiment of the present disclosure, because the can connection portion 324 is closely attached and disposed between the edge of the cap 40 and the crimping portion 120 of the can 10 for fixing the edge of the cap 40, a gasket for sealing is not additionally required. Accordingly, the internal volume of the can 10 may be secured, and thus, the space utilization and energy density of the battery cell 1 may be maximized.

Also, the can connection portion 324 may be disposed in a portion between the edge of the cap 40 and the crimping portion 120 of the can 10. That is, the can connection portion 324 may contact an inner circumferential surface of the crimping portion 120 of the can 10 and the edge of the cap 40 at a certain interval. Because the can connection portion 324 may include the direction changing portion 326, electrical connection and fixing for sealing between the can 10 and the cap 40 may be sufficiently performed. Accordingly, because a gasket for sealing may not be additionally required, the space utilization and energy density of the battery cell 1 may be maximized.

Accordingly, in the battery cell 1 according to an embodiment of the present disclosure, even without additionally providing a gasket for sealing or insulation, because the can connection portion 324 of the current collecting plate 30 functions as a gasket, electrical connection and fixing for sealing between the can 10 and the cap 40 may be performed at once. Accordingly, a gasket bonding process for sealing or insulation or a tack welding process between elements may be omitted. Accordingly, because welding man-hours of a welding portion 50 described below may be reduced, the production efficiency of the battery cell 1 may be improved and production costs may be reduced.

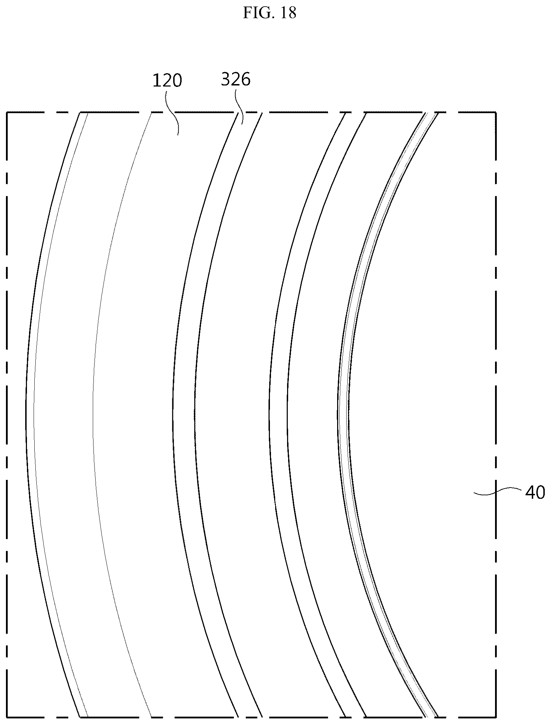

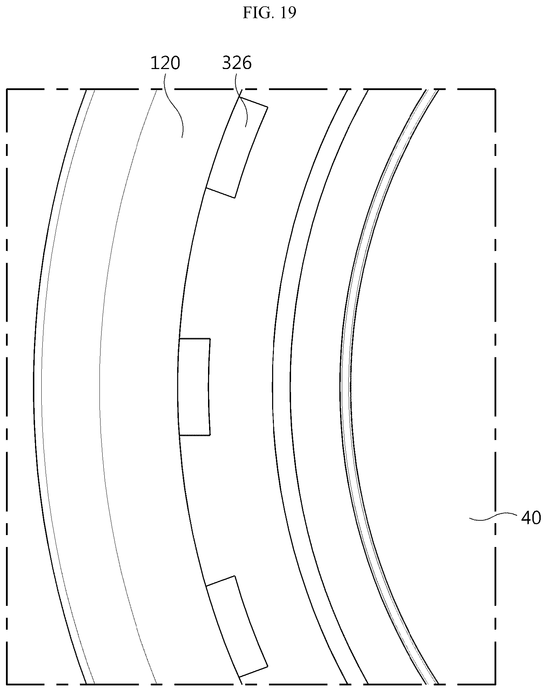

FIGS. 18 and 19 are views for describing an exemplary arrangement of the crimping portion 120 of the can 10 and the current collecting plate 30 at the portion F of FIG. 12.

Referring to FIGS. 18 and 19, the direction changing portion 326 of the current collecting plate 30 may be bent inward, and at least a part of the direction changing portion 326 may be disposed between a top surface of the cap 40 and a bottom surface of a bent part of the crimping portion 120 of the can 10. Accordingly, even when a dimensional error of a component or an assembly error between components occurs during a process of manufacturing the battery cell 1, the current collecting plate 30 may be further compressed and closely attached in an up-down direction to the edge of the cap 40 by the crimping portion 120 of the can 10. Accordingly, when the open end of the can 10 is sealed through welding described below, the fact that an area where components are closely attached to each other is large may be fully utilized in the crimping sealing method.

At least a part of the direction changing portion 326 may extend inward beyond the bent part of the crimping portion 120 of the can 10. For example, the direction changing portion 326 may extend inward in the radial direction more than the bent part of the crimping portion 120 of the can 10 so that a certain part of the direction changing portion 326 is exposed to the outside. Also, some parts of the direction changing portion 326 arranged at certain intervals along an outer circumferential surface of an end of the crimping portion 120 of the can 10 may be exposed to the outside.

Accordingly, in the battery cell 1 according to an embodiment of the present disclosure, when the can 10 and the cap 40 are welded to seal the open end of the can 10, an area where the current collecting plate 30 may also be welded at once may be provided. That is, because electrical connection and a sealing process between components of the battery cell 1 may be performed at once through only one welding, economic benefits due to process simplification and component reduction may be achieved.

As described above and illustrated in FIGS. 1 to 19, the battery cell 1 according to an embodiment of the present disclosure may include the can 10, the electrode assembly 20, the current collecting plate 30, and the cap 40, and the can 10 may include the beading portion 110 and the crimping portion 120. As such, the battery cell 1 may overcome a dimensional error of a component or an assembly error between components during a process of manufacturing the battery cell 1 by introducing a crimping process in the manufacturing process.

However, in the prior art, when closing the open end of the can 10, a process of electrically connecting the current collecting plate 30 to the cap 40 or the can 10 and a process of connecting the cap 40 to the can 10 were performed. This increase in man-hours has become a factor that reduces the production efficiency of the battery cell 1 and increases production costs. Also, when welding is performed at once by using a welding sealing method, welding heat generated during the welding may be transferred into the can 10, or a welding laser may be introduced into the can 10 through a gap generated due to an assembly error of the battery cell 1. This may affect the electrode assembly 20 and may damage the separator.

Accordingly, in order to solve the problems, a sealing method of the battery cell 1 according to an embodiment of the present disclosure is a welding method, but may be implemented by combining a crimping sealing method of the battery cell 1 as described above with the welding method.

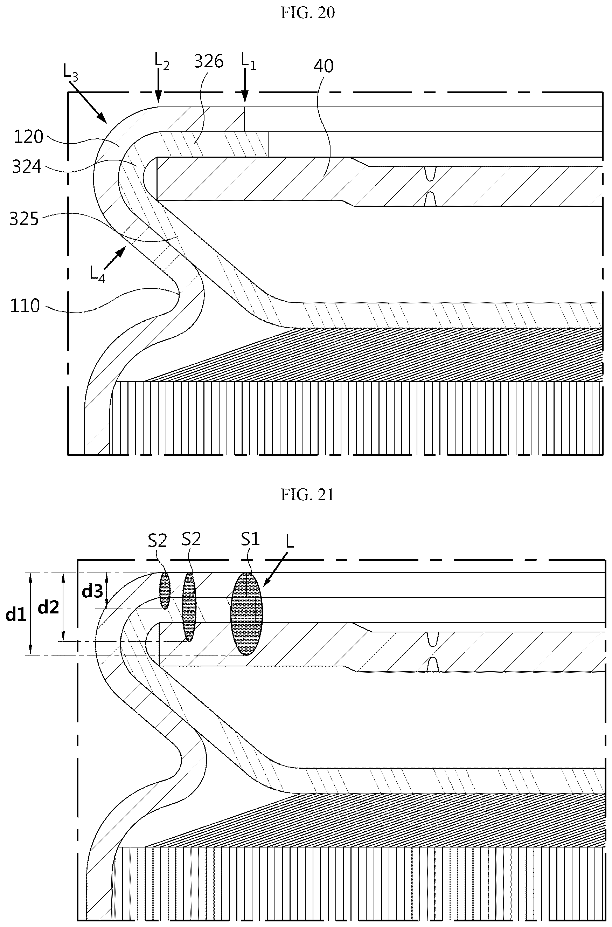

FIG. 20 is a view illustrating a position of the welding portion 50 of the battery cell 1 according to an embodiment of the present disclosure.

Referring to FIG. 20, in addition to the above configuration, the battery cell 1 according to an embodiment may further include the welding portion 50.

The welding portion 50 may be configured so that the can 10 and the cap 40 are welded together. Accordingly, the can 10 and the cap 40 may be conductive through the welding portion 50.

A sealing method of the welding portion 50 may include a laser.

The welding portion 50 may be welded in a state where each component is compressed through the crimping portion 120 of the can 10. Accordingly, because components are closely attached to each other before the welding portion 50 is formed, a separate tack welding process between the components may not be required. Accordingly, a tack welding process for adhering the cap 40 to the side wall member 11 inside the can 10 may be omitted, thereby simplifying the overall process. The welding portion 50 may be welded in an area or part where the can 10, the current collecting portion 30, and the cap 40 overlap each other and are compressed to each other.

Accordingly, in the battery cell 1 according to the present embodiment, because a heat transfer path of welding heat from the welding portion 50 to the electrode assembly 20 is increased, the effect on the electrode assembly 20 may be reduced, and because melting or deformation of the separator 28 is prevented, damage to the electrode assembly 20 may be prevented.

Also, in the battery cell 1 according to the present embodiment, because the beading portion 110 and the crimping portion 120 are formed on the can 10 to be closely attached to and compress the edge of the cap 40, a contact area between components may increase. Accordingly, because a gap or lifting between the edge of the cap 40 and the can 10 due to an assembly or processing error during a process of manufacturing the battery cell 1 may be removed or prevented, penetration of a welding laser L into the electrode assembly 20 may be prevented. Accordingly, because the welding laser L does not penetrate into the can 10, the lifespan of the battery cell 1 may be ultimately extended.

Also, in the battery cell 1 according to the present embodiment, because electrical connection and a sealing structure between components of the battery cell 1 may be implemented together through welding and the can connection portion 324 of the current collecting plate 32 functions as a gasket as described above, a gasket for sealing or insulation may be omitted. Accordingly, because the maximum volume of the electrode assembly 20 accommodated inside the can 10 may be secured, the energy density of the battery cell 1 may be improved.

The welding portion 50 may be welded in a bent part or an outermost part of the crimping portion 120 of the can 10. That is, in the battery cell 1, after the crimping portion 120 of the can 10 is formed, welding may be performed in the bent part or the outermost part of the crimping portion 120 of the can 10. For example, welding may be performed on top surfaces L₁, L₂ that are the bent part of the crimping portion 120 of the can 10, and may be performed on side surfaces L₃, L₄ that are the outermost part. Preferably, seam welding may be performed to continuously form a welding line, thereby providing storing adhesion at a welding portion and maintaining the airtightness of sealing.

Accordingly, in the battery cell 1, because an electrolyte is injected into the can 10 before or after the beading portion 110 is formed on the can 10, the edge of the cap 40 is arranged on the beading portion 110, and the crimping portion 120 is formed on the can 10 to compress the edge of the cap 40, a part to be welded, which is not contaminated with an electrolyte at all, may be provided. Accordingly, because an additional cleaning process for a welding process of the welding portion 50 during a process of manufacturing the battery cell 1 may not be required, the manufacturing process may be simplified.

As such, because tack welding is omitted and an electrolyte cleaning process for welding is omitted, a process time may be reduced. Also, because lifting of a cap is prevented even there is a tolerance between components as a crimping process is used, an inspection process may be easy without strict tolerance management. In addition, because defective products are reduced and the unit cost of parts is reduced, overall battery cell manufacturing costs may be reduced.

Accordingly, because the battery cell 1 according to an embodiment of the present disclosure includes the crimping portion 120 of the can 10 and the welding portion 50 as elements, the battery cell 1 may have both the advantages of a crimping sealing method and a welding sealing method. Furthermore, because double sealing is possible through the crimping portion 120 and the welding portion 50, the quality of the battery cell 1 may be improved. Hereinafter, a welding sealing method according to the present embodiment will be described in detail.

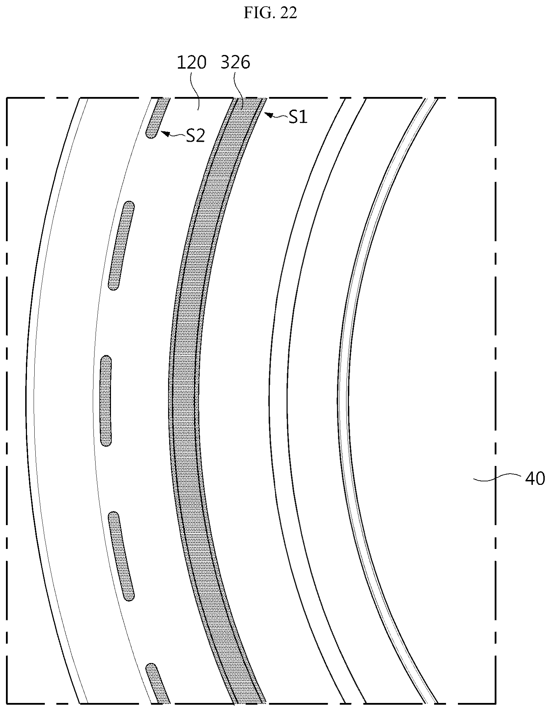

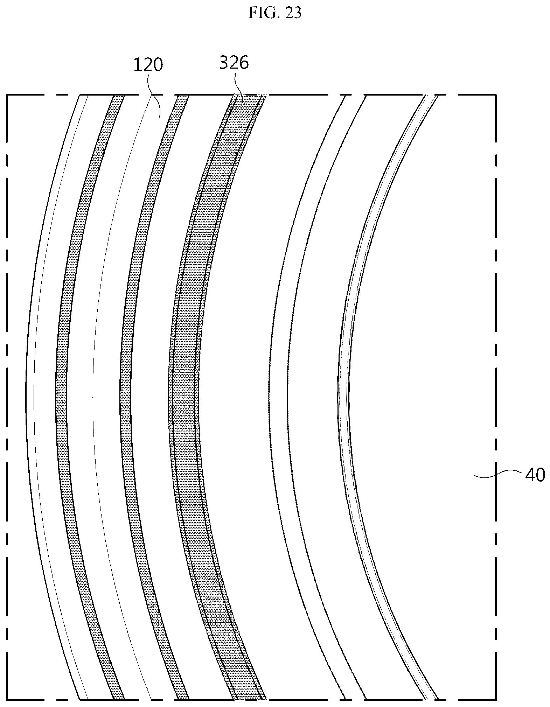

FIG. 21 is a view illustrating a penetration depth of the welding portion 50 of the battery cell 1 according to an embodiment of the present disclosure. FIGS. 22 and 23 are views illustrating a welding shape of the welding portion 50 of the battery cell 1 according to an embodiment of the present disclosure.

Referring to FIG. 21, the welding portion 50 may include at least one of a first welding portion S1 and a second welding portion S2.

The first welding portion S1 may be welded along an end of the bent part of the crimping portion 120 of the can 10. Accordingly, because welding is sufficiently performed at the end of the bent part of the crimping portion 120 and near an edge of a top surface of the cap 40, weldability, stability, and durability may be ensured.

In this case, as shown in FIGS. 18 and 19, the first welding portion S1 may be welded to at least a part of the direction changing portion 326 of the second current collecting plate 32 exposed to the outside at once. Accordingly, because electrical connection and sealing fixing of the can 10, the current collecting plate 30, and the cap 40 may be performed at once through only one welding process, welding man-hours may be reduced.

The crimping portion 120 of the can 10 may provide a wide contact area on a top surface of the battery cell 1. Accordingly, the second welding portion S2 may be additionally formed at an outer position in the radial direction than the first welding portion S1. That is, the welding portion 50 may include a plurality of welding portions. Accordingly, electrical connection and sealing fixing may be overlappingly performed by using a plurality of welding processes.

The second welding portion S2 may be welded along a vicinity of the end of the bent part of the crimping portion 120 of the can 10. Accordingly, because a compressed part by the crimping portion 120 of the can 10 is welded along a wider part, more solid adhesion or additional adhesion may be provided, thereby further enhancing a sealing force by welding.

In this case, the welding portion 50 may include a plurality of welding portions in the bent part of the crimping portion 120 of the can 10, and the second welding portion S2 may have a penetration depth different from that of the first welding portion S1. For example, a penetration depth d1 of the first welding portion S1 may be relatively deep so that the crimping portion 120 of the can 10 and the direction changing portion 326 of the second current collecting plate 32 are adhered. Also, a penetration depth d2 of the second welding portion S2 may be less than the penetration depth d1 of the first welding portion S1 so that the edge of the top surface of the cap 40 and the crimping portion 120 of the can 10 are adhered and the current collecting plate 30 is also welded. Also, the second welding portion S2 may be welded only to the crimping portion 120 and the current collecting plate 30, and a penetration depth d3 may be less than the penetration depth d1 of the first welding portion S1.

That is, because the welding portion 50 may be weakened or deformed due to excessive melting, the optimal welding strength of the welding portion 50 may be ensured and durability and reliability may be improved by appropriately adjusting a required penetration depth of each welding portion 50. Also, when a plurality of welding portions 50 with different positions are provided, even when a welding defect occurs in one welding portion, poor welding may be prevented if the other welding portions are welded in an intended normal range.

Referring to FIGS. 22 and 23, a plurality of welding portions 50 may be provided, and at least one may have a closed-curve welding shape. For example, one of the welding portions 50 may have a closed-curve welding shape at a part of the direction changing portion 326 of the second current collecting plate 32 exposed to the outside and an end of the bent part of the crimping portion 120 of the can 10. Also, one of the welding portions 50 may have a closed-curve welding shape or welding shapes arranged at certain intervals along an outer circumference near the end of the bent part of the crimping portion 120 of the can 10.

Accordingly, the effect of welding heat by the welding portion 50 may be further minimized, and the electrical connection and sealing force may be further enhanced by providing multiple welding portions 50.

Also, the welding portion 50 may have a welding position or a penetration depth that may vary according to a shape of the current collecting plate 30. As described above, the can connection portion 324 of the current collecting plate 30 have any of various shapes to provide a sealing force without a sealing gasket for sealing by being disposed between the edge of the cap 40 and the crimping portion 120 of the can 10. Accordingly, the number, position, and penetration depth of the welding portion 50 may be appropriately modified according to a shape of the current collecting plate 30.

Accordingly, in the battery cell 1 according to an embodiment of the present disclosure, welding defects may be reduced, and electrical connection performance and sealing performance may be further improved.

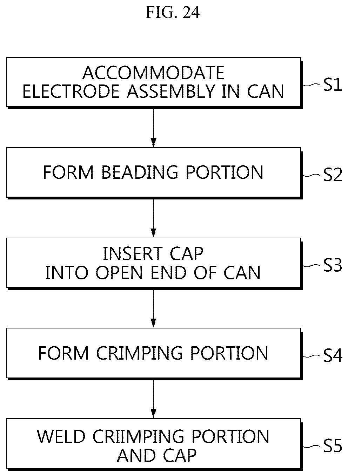

FIG. 24 is a flowchart illustrating a process of manufacturing the battery cell 1 according to an embodiment of the present disclosure. Hereinafter, an example of a method of manufacturing the battery cell 1 described above will be described with reference to FIG. 24.

First, the can 10 having one open end is prepared, and the electrode assembly 20 in which the first current collecting plate 31 and the second current collecting plate 32 are welded at both ends is prepared.

Next, the electrode assembly 20 is accommodated in the can 10 (S1).

Next, the beading portion 110 is formed by beading a side portion of the can 10 (S2). In this case, the beading portion 110 of the can 10 may be formed near the open end of the can 10. Hereinafter, the same description as that made for the beading portion 110 with reference to FIGS. 13 and 14 will be omitted.

In this case, an electrolyte may be injected into the can 10 before or after the beading portion 110 of the can 10 is formed. Accordingly, even when an electrolyte is injected into the can 10 before a welding process for sealing the can 10, a welding portion of the can 10 may not be contaminated with the electrolyte, thereby enabling welding even without performing a cleaning process.

After the electrolyte is injected, the open end of the can 10 is covered with the cap 40 (S3).

Next, the crimping portion 120 is formed by crimping the open end of the can 10 (S4).

Due to the crimping, the second current collecting plate 32 is compressed and disposed between an edge of the cap 40 and the crimping portion 120 of the can 10. That is, first sealing of the present disclosure is performed. Hereinafter, the same description as that made for the second current collecting plate 32 with reference to FIGS. 15 to 19 will be omitted.

In this case, a part to be welded which is not contaminated with the electrolyte is provided on a top surface of the crimping portion 120 of the can 10 and a top surface of the can 10.

Next, the welding portion 50 for welding the crimping portion 120 of the can 10 and the cap 40 is formed (S5). The welding portion 50 may be formed in an area where an upper portion of the cap 40 and the can 10 overlap each other. That is, second sealing of the present disclosure is performed. Accordingly, in the method of manufacturing the battery cell 1 according to an embodiment of the present disclosure, because double sealing using crimping and welding is performed, a stronger sealing force may be achieved. The welding may be, for example, laser welding. However, an adhesion method is not necessarily limited thereto.

In this case, the welding portion 50 may be welded together with the second current collecting plate 32.

Also, the welding portion 50 may include the first welding portion S1 and the second welding portion S2. In this case, the second welding portion S2 may be formed and then the first welding portion S1 may be formed, or the first welding portion S1 may be formed and then the second welding portion S2 may be formed. Alternatively, the first welding portion S1 and the second welding portion S2 may be formed simultaneously.

Penetration depths of the first welding portion S1 and the second welding portion S2 may be the same or different from each other. The same description as that made for the welding portion 50 with reference to FIGS. 20 to 23 will be omitted.

Accordingly, the battery cell 1 according to an embodiment of the present disclosure may provide a design of preventing welding heat from affecting the performance of the battery cell 1 and increasing the energy density per unit volume of the battery cell 1, by combining a crimping fixing method with a welding sealing method of the can 10 and the cap 40 for sealing.

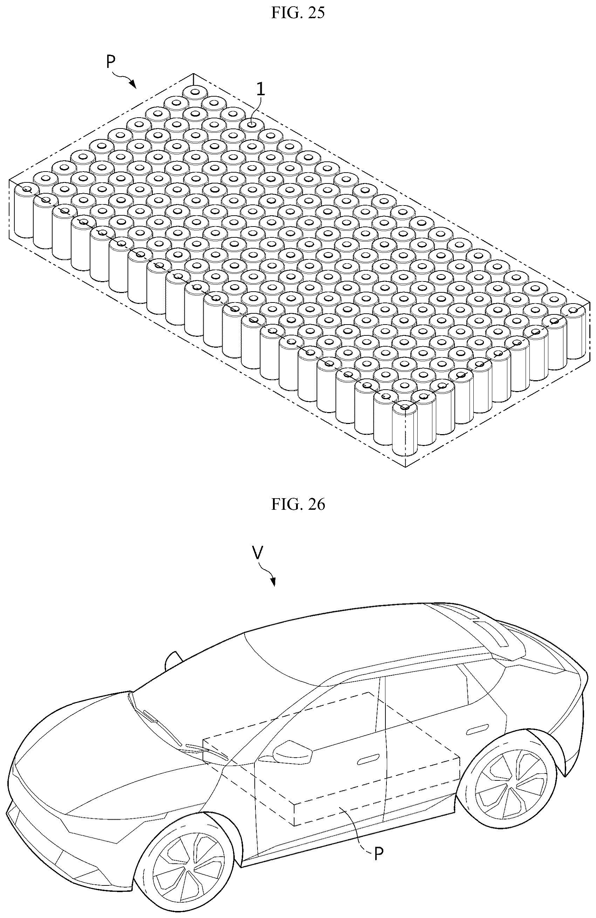

FIG. 25 is a view schematically illustrating a battery pack P including the battery cell 1 according to an embodiment of the present disclosure. FIG. 26 is a view schematically illustrating a vehicle V including the battery pack P according to an embodiment of the present disclosure.

The battery pack P according to an embodiment of the present disclosure may further include various other elements of the battery pack P known at the time of filling the application of the present disclosure. For example, the battery pack P according to an embodiment of the present disclosure may further include elements such as a current sensor, a fuse, and a service plug.

Also, the vehicle V according to an embodiment of the present disclosure may include one or more battery packs P according to the present disclosure. The vehicle V according to an embodiment of the present disclosure may further include various other elements included in the vehicle V in addition to the battery pack P. For example, the vehicle V according to an embodiment of the present disclosure may further include a vehicle body, a motor, and a control device such as an electronic control unit (ECU), in addition to the battery pack P according to an embodiment of the present disclosure.

Also, the battery pack P according to an embodiment of the present disclosure may be applied as any of various types of energy storage devices or power sources, and may be provided in any of other devices, mechanisms, and equipment such as an energy storage system using a secondary battery, in addition to the vehicle V.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

### [Explanation of Reference Signs]

1: battery cell
10: can
11: side wall member
110: beading portion
111: lower inclined recessed portion
112: upper inclined recessed portion
120: crimping portion
12: bottom member
13: first electrode terminal (positive electrode terminal)
14: gasket
15: second electrode terminal
16: insulator
20: electrode assembly
21: first electrode
22: second electrode
23: metal foil
24: active material layer
25: coated portion
26: uncoating portion
27: electrode tap (notching tap)
28: separator
31: first current collecting plate (positive electrode current collecting plate)
311: terminal connection portion
312: ring portion
313: electrode connection portion
32: second current collecting plate (negative electrode current collecting plate)
321: inner ring portion
322: hole
323: electrode connection portion
324: can connection portion
325: outward extension portion
326: direction changing portion
40: cap
50: welding portion
S1: first welding portion
S2: second welding portion
P: battery pack
V: vehicle
L: laser

## Claims

1. A battery cell comprising:
a can with an open end on one side;
an electrode assembly accommodated inside the can;
a current collecting plate electrically connected to the electrode assembly;
a cap covering the open end of the can; and
a welding portion where the can and the cap are adhered to each other through welding,
wherein the can comprises:
a beading portion formed by press-fitting a side portion of the can inward along a circumference near the open end of the can; and
a crimping portion formed by bending a side portion of the can inward along a circumference of the open end to surround and fix an edge of the cap.

2. The battery cell according to claim 1, wherein the beading portion comprises:
a lower inclined recessed portion extending downward as it goes inward; and
an upper inclined recessed portion connected to the lower inclined recessed portion and extending upward as it goes inward.

3. The battery cell according to claim 2, wherein the beading portion has a shape in which each of the lower inclined recessed portion and the upper inclined recessed portion is inclined at a certain angle.

4. The battery cell according to claim 1, wherein the current collecting plate comprises an outward extension portion extending upward as it goes outward,
wherein the outward extension portion is in contact with the beading portion.

5. The battery cell according to claim 1, wherein the current collecting plate comprises a can connection portion disposed between the edge of the cap and the crimping portion.

6. The battery cell according to claim 5, wherein the can connection portion has a ring shape or a closed loop shape.

7. The battery cell according to claim 1, wherein the current collecting plate comprises a direction changing portion bent inward,
wherein the direction changing portion is disposed between a top surface of the cap and a bottom surface of a bent part of the crimping portion.

8. The battery cell according to claim 7, wherein at least a part of the direction changing portion extends inward beyond the bent part of the crimping portion.

9. The battery cell according to claim 1, wherein the welding portion is seam welded in a bent part or an outermost part of the crimping portion.

10. The battery cell according to claim 1, wherein the welding portion is welded together with at least a part of the current collecting plate.

11. The battery cell according to claim 1, wherein the welding portion comprises at least one of:
a first welding portion welded along an end of a bent part of the crimping portion; and
a second welding portion welded along a vicinity of the end of the bent part of the crimping portion.

12. The battery cell according to claim 1, wherein the welding portion comprises a plurality of welding portions with different penetration depths.

13. The battery cell according to claim 1, wherein the welding portion comprises a plurality of welding portions, and at least one welding portion has a closed-curve welding shape.

14. The battery cell according to claim 1, wherein a welding position or a penetration depth of the welding portion varies according to a shape of the current collecting plate.

15. A battery pack comprising the battery cell according to any one of claims 1 to 14.

16. A vehicle on which at least battery pack according to claim 15 is mounted.

17. A method of manufacturing a battery cell, the method comprising:
accommodating an electrode assembly connected to a current collecting plate in a can;
beading a side portion of the can;
inserting a cap into an open end of the can;
crimping and sealing the open end of the can; and
performing double sealing by welding an area where an upper portion of the cap and the can overlap each other.

18. The method of manufacturing a battery cell according to claim 17, further comprising injecting an electrolyte into the can before or after the beading.

19. The method of manufacturing a battery cell according to claim 17, wherein the performing of the double sealing comprises welding the current collecting plate, the cap, and the can together.

20. The method of manufacturing a battery cell according to any one of claims 17 to 19, wherein the performing of the double sealing comprises performing seam welding so that penetration depths of a plurality of welding portions are same or different from each other.
